# EUROPEAN PATENT SPECIFICATION

(11) **EP 2 364 055 B1**
(45) Date of publication and mention of the grant of the patent: **12.12.2012**
(21) Application number: 11154851.7
(22) Date of filing: 17.02.2011
(51) Int. Cl.: H04W 76/06, H04W 76/02

(54) **Method for synchronously maintaining PDP context status between wireless communication network and mobile station and associated mobile station**
Verfahren zur synchronen Beibehaltung des PDP-Kontextstatus zwischen einem drahtlosen Kommunikationsnetzwerk und einer Mobilstation sowie zugehörige Mobilstation
Procédé de maintien synchronisé d'état de contexte PDP entre un réseau de communication sans fil et une station de base et station mobile associée

(30) Priority: 23.02.2010 TW 099105160
(43) Date of publication of application: 07.09.2011
(73) Proprietor: HTC Corporation, Taoyuan County 330 (TW)
(72) Inventor: Ping, Shan-Wei, Taoyuan City, Taoyuan County 330 (TW)
(74) Representative: 2K Patentanwälte Blasberg Kewitz & Reichel

(56) References cited:
- US-A1- 2006 149 847
- US-A1- 2007 218 911
- US-A1- 2008 130 594
- 3GPP: "3GPP TS 44.018 V9.3.0 (2009-12); 3rd Generation Partnership Project; Technical Specification Group GSM/EDGE Radio Access Network; Mobile radio interface layer 3 specification; Radio Resource Control (RRC) protocol (Release 9); pages 1, 2, 111 and 112", 3GPP , 1 December 2009 (2009-12-01), XP002638984, Retrieved from the Internet: URL:http://www.3gpp.org/ftp/Specs/html-inf o/44-series.htm [retrieved on 2011-05-24]
- 3GPP: "3GPP TS 24.008 V9.1.0 (2009-12); 3rd Generation Partnership Project; Technical Specification Group Core Network and Terminals; Mobile radio interface Layer 3 specification; Core network protocols; Stage 3 (Release 9); pages 1, 2, 144, 258-260, 334, 526", 3GPP , 1 December 2009 (2009-12-01), XP002638985, Retrieved from the Internet: URL:http://www.3gpp.org/ftp/Specs/html-inf o/24-series.htm [retrieved on 2011-05-24]

## Description

### BACKGROUND OF INVENTION

### 1. FIELD OF THE INVENTION

The present invention relates to mobile stations in wireless communication networks, and more particularly to a method for synchronously maintaining PDP context status between the wireless communication network and the mobile station and an associated mobile station.

### 2. DESCRIPTION OF THE PRIOR ART

In a GPRS-supported GSM network (called GSM/GPRS network below), when at least one of the network and the mobile station (also called user equipment) does not support dual transfer mode (DTM), the mobile station will not be able to maintain a circuit-switched connection and a packet-switched connection with the network simultaneously. In the GSM/GPRS network, the circuit-switched connection such as a GSM call connection can provide phone call service, while the packet-switched connection such as a GPRS connection can provide data transmission service. Thus, when the DTM is not supported, the mobile station cannot establish the GPRS connection after the GSM call connection with the network is established. This will cause the asynchronous packet data protocol (PDP) context status between the network and the mobile station in some situations.

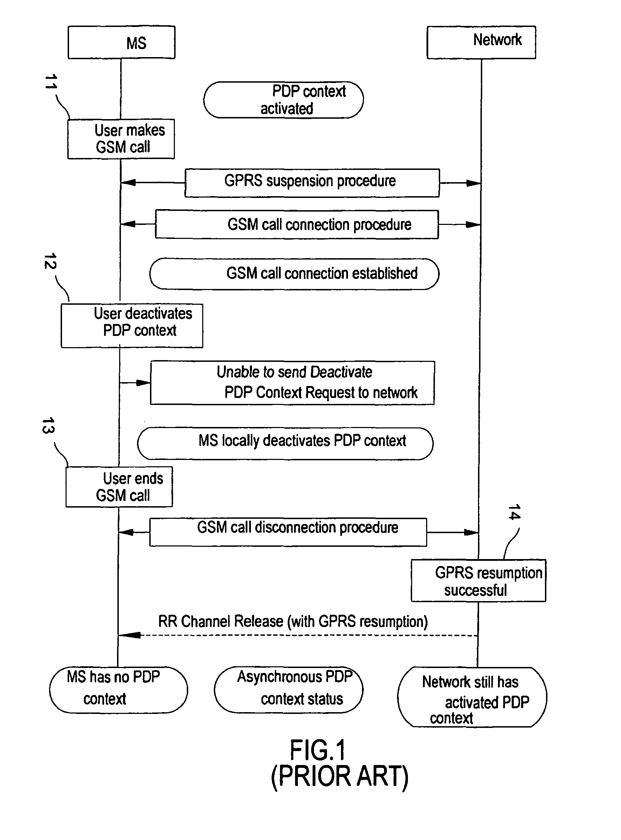

Fig.1 shows how the asynchronous PDP context status occurs between the mobile station and the GSM/GPRS network in the prior arts. In the flow of Fig.1 at the beginning, the mobile station (shown as MS) has already an activated PDP context used for the packet-switched service (i.e. GPRS service in the GSM/GPRS network). Next, in step 11, if the user wants to make a GSM call, the mobile station will on one hand execute the GPRS suspension procedure (cf. 3GPP TS 44.018, section 3.4.25) to request the network to suspend the packet-switched service, and on the other hand execute the call connection procedure to establish the GSM call connection with the network. After the GSM call connection is established, in step 12, if the user no longer wants to use the packet-switched service and thus needs to deactivate the PDP context, then the mobile station will execute the PDP context deactivation procedure (cf. 3GPP TS 24.008, section 6.1.3.4) to send out a Deactivate PDP Context Request message, and start the timer T3390 to wait for the response of the network. However, since the GSM call connection is established, the mobile station cannot establish the GPRS connection so as to transmit the Deactivate PDP Context Request message to the network. Thus, the mobile station will not receive the response from the network until the timer is timeout. Then, according to 3GPP TS 24.008, section 6.1.3.4.3, the mobile station will re-send the Deactivate PDP Context Request message, reset the timer T3390 and wait for the response of the network again. The above process will be performed repeatedly if the mobile station does not receive any response. After the timer T3390 has expired for the fifth time, the mobile station will deactivate the PDP context locally so as to release the related wireless resources and delete the associated information about the PDP context. To "deactivate locally" means that the mobile station only executes the deactivation of the PDP context one-sidedly, without connecting to the network to synchronously complete the PDP context deactivation procedure therewith. So, the network does not know the mobile station has already deactivated the PDP context. Next, in step 13, when the user is to end the GSM call, the mobile station executes the call disconnection procedure; in step 14, the network performs GPRS resumption, and indicates whether the resumption is successful in the RR Channel Release message sent to the mobile station subsequently. If the GPRS resumption is successful, the mobile station determines that there is no need to perform the GPRS resumption and thus the routing area updating procedure will not be executed (cf. 3GPP TS 24.008, section 4.7.5.1). This will cause the problem as below: the PDP context in the side of mobile station is deactivated while the PDP context in the network side is still in activated status, such that the PDP context status between the mobile station and the network is not synchronous. Later, if the mobile station requests to establish a GPRS connection, the network will possibly neglect this request so that the mobile station cannot use the GPRS service.

### SUMMARY OF INVENTION

It is therefore one objective of the present invention to provide a method for synchronously maintaining PDP context status between the wireless communication network and the mobile station and an associated mobile station, thereby preventing from the asynchronous PDP context status between the network and the mobile station caused by the prior arts.

In one aspect of the present invention, a method used in a mobile station for synchronously maintaining PDP context status between a wireless communication network and the mobile station is provided. Both the mobile station and the wireless communication network activate a PDP context for a packet-switched service. The method comprises: requesting the wireless communication network to suspend the packet-switched service when a circuit-switched connection with the wireless communication network is established; deactivating the PDP context after the circuit-switched connection is established; and informing the wireless communication network, after the circuit-switched connection is disconnected, that the PDP context is deactivated when the wireless communication network informs that the first packet-switched service is resumed.

In another aspect of the present invention, a mobile station for synchronously maintaining PDP context status with a wireless communication network is provided. Both the mobile station and the wireless communication network activate a PDP context for a packet-switched service. The mobile station comprises: a requesting means for requesting the wireless communication network to suspend the packet-switched service when the mobile station establishes a circuit-switched connection with the wireless communication network; a deactivating means for deactivating the PDP context after the circuit-switched connection is established; and an informing means for informing the wireless communication network, after the circuit-switched connection is disconnected, that the PDP context is deactivated when the wireless communication network informs the mobile station that the first packet-switched service is resumed.

### BRIEF DESCRIPTION OF THE DRAWINGS

Fig.1 shows how the asynchronous PDP context status occurs between the mobile station and the GSM/GPRS network in the prior arts.
Fig.2 shows how the problem of the asynchronous PDP context status between the mobile station and the GSM/GPRS network is handled according to one embodiment of the present invention.
Fig.3 is a flow chart of the method for synchronously maintaining the PDP context status between the wireless communication network and the mobile station according to one embodiment of the present invention.
Fig.4 shows part of the data format of the Routing Area Update Request message.
Fig.5 shows the format of the information element of the PDP context status.
Fig.6 shows a block diagram of one embodiment of the mobile station according to the present invention.

### DETAILED DESCRIPTION

Reference will now to be made in detail to embodiments of the present invention, which are illustrated in the accompanying drawings. All the embodiments can be applied to the case where at least one of the mobile station (for example, but not limited to, the mobile phone) and the wireless communication network (for example, but not limited to, the GSM/GPRS network) does not support the DTM. When the wireless communication network does not support the DTM, it does not necessarily mean that the whole network does not support. Instead, it is possible that only part of the network equipments such as cells does not support while the others do. Thus, when the mobile station connects to the network via the network equipment not supporting the DTM, the present invention can still apply to.

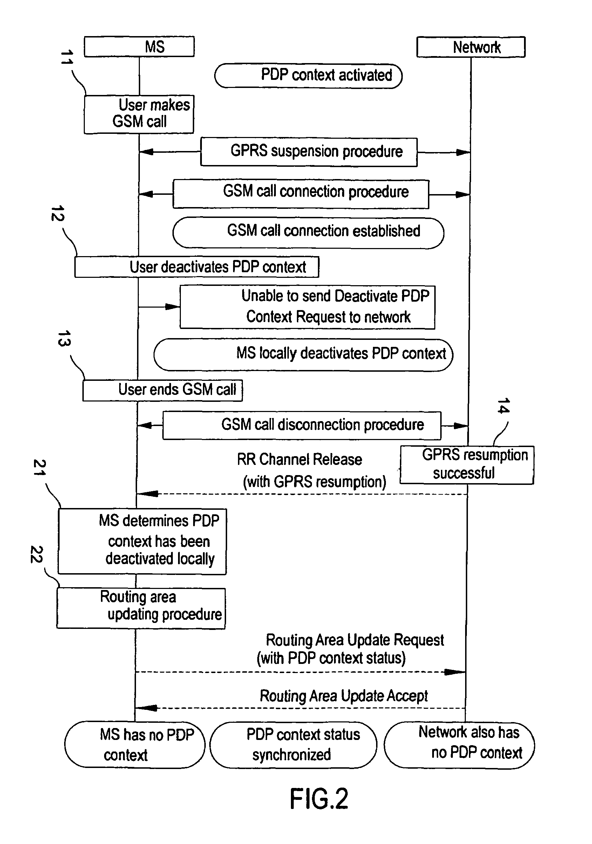

In the GSM/GPRS network, if the mobile station supports GPRS function, the routing area updating procedure is periodically executed to inform the network of the current routing area where the mobile station is located. In other specific situations, e.g. when the mobile station determines that the GPRS resumption needs to be performed, it will also execute the routing area updating procedure, as described in 3GPP TS 24.008, section 4.7.5.1. However, in step 14 of Fig.1, if the network successfully performs the GPRS resumption and informs the mobile station about that after the GSM call is over, the mobile station will determine that there is no need to perform the GPRS resumption. Thus, the mobile station will not also execute the routing area updating procedure so that the asynchronous PDP context status exists between the mobile station and the network. Therefore, in one embodiment of the present invention, a new specific situation where the mobile station needs to execute the routing area updating procedure is added, that is, if the mobile station has locally deactivated the PDP context previously, then the mobile station also needs to execute the routing area updating procedure, as shown in steps 21 and 22 of Fig.2. In step 21, the mobile station (shown as MS) determines that the PDP context has been locally deactivated previously, and then in step 22, the mobile station executes the routing area updating procedure to send out the Routing Area Update Request message to the network. The Routing Area Update Request message includes an information element showing the current PDP context status (i.e. deactivated at this situation) in the mobile station. Thus, after the network responds the Routing Area Update Accept message to the mobile station, the synchronous PDP context status can be reached between the mobile station and the network, as shown in Fig.2.

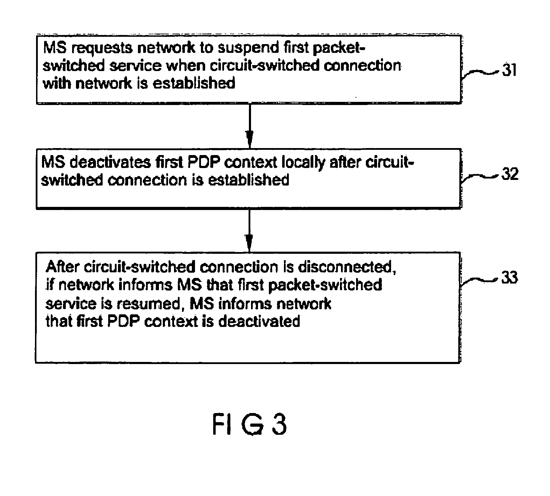

Fig.3 is a flow chart of the method for synchronously maintaining the PDP context status between the wireless communication network and the mobile station according to one embodiment of the present invention. This method is used in the mobile station. Before executing the method, both the mobile station and the wireless communication network activate a first PDP context for a first packet-switched service. In step 31, when establishing a circuit-switched connection (e.g. phone call connection) with the network, the mobile station (shown as MS in Fig.3) requests the network to suspend the first packet-switched service. When the network is a GSM/GPRS network, the circuit-switched connection can be a GSM call connection, and the mobile station can execute the GPRS suspension procedure (cf. 3GPP TS 44.018, section 3.4.25) to request the GSM/GPRS network to suspend the first packet-switched service.

In step 32, after the circuit-switched connection is established, the mobile station deactivates the first PDP context locally. The mobile station can perform this deactivation according to an internal configuration or a request of the user. When the network is the GSM/GPRS network, the mobile station will execute the PDP context deactivation procedure (cf. 3GPP TS 24.008, section 6.1.3.4). If the mobile station sends out the Deactivate PDP Context Request message five times while still receives no response from the network within the timeout of the timer T3390, then the mobile station deactivates the first PDP context locally.

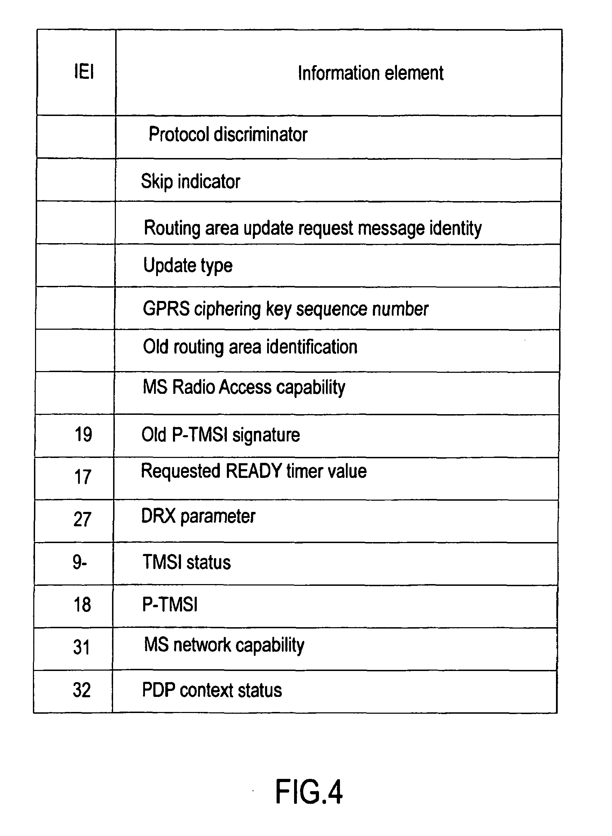

In step 33, after the circuit-switched connection is disconnected, if the network informs the mobile station that the first packet-switched service is resumed, then the mobile station informs the network about the deactivated status of the first PDP context so as to synchronize the PDP context status between the mobile station and the network. When the network is the GSM/GPRS network, the mobile station can inform the network about the deactivated status of the first PDP context by executing the routing area updating procedure to send out the Routing Area Update Request message, whose data format is partly shown in Fig.4 (also cf. 3GPP TS 24.008, table 9.4.14). The information element of the PDP context status, whose information element identifier (IEI) is 32, can be used to record the current status of the first PDP context. Thus, when receiving the Routing Area Update Request message, the network can update the status of the first PDP context according to the information element of the PDP context therein, thereby keeping synchronized with the mobile station.

Preferably, in step 32, the mobile station further stores a deactivation record for showing that the mobile station has deactivated the first PDP context locally. Then, in step 33, the mobile station informs the network about the deactivated status of the first PDP context according to the deactivation record.

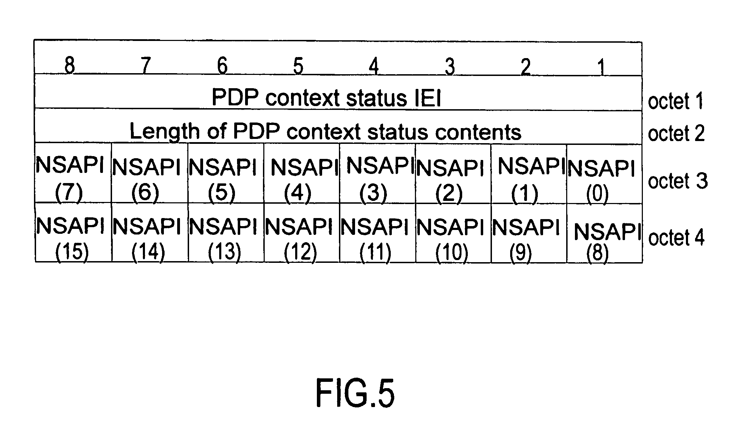

The embodiment of Fig.3 can be extended to the case where two or more PDP contexts have been activated between the mobile station and the network. An embodiment including two activated PDP contexts are described below: in addition to the first PDP context, both the mobile station and the network have further activated a second PDP context for a second packet-switched service. In this embodiment, each step of Fig.3 is adjusted as follows: in step 31, when the circuit-switched connection is established, the mobile station requests the network to suspend both the first and second packet-switched services; in step 32, after the circuit-switched connection is established, the mobile station locally deactivates the first and second PDP contexts; in step 33, after the circuit-switched connection is disconnected, if the network informs the mobile station that the first and second packet-switched services are resumed, then the mobile station informs the network that the first and second PDP contexts are deactivated. When the network is the GSM/GPRS network, the mobile station can inform the network about the deactivated status of the first and second PDP contexts by executing the routing area updating procedure only once. This is because the information element of the PDP context in the Routing Area Update Request message can record the current status of multiple PDP contexts simultaneously, as shown in Fig.5 (cf. 3GPP TS 24.008, table 10.5.148). Each NSAPI (i.e. network service access point identifier) is one bit value for representing the status of one PDP context, wherein 0 and 1 represent deactivated and activated respectfully. However, it should be noted that NSAPI(0)∼NSAPI(4) are reserved for other use in the current 3GPP specification. Since the informing of the deactivated status of both the first and second PDP contexts only needs one-time execution of the routing area updating procedure, the signaling load between the mobile station and the network can be reduced. Regarding the case where three or more PDP contexts have been activated, the method for synchronously maintaining the PDP context status between the mobile station and the network can be derived similarly as above.

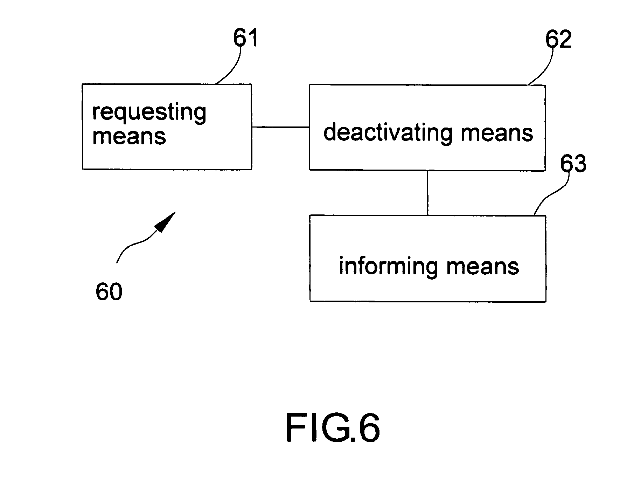

Fig.6 shows a block diagram of one embodiment of the mobile station 60 according to the present invention. The mobile station 60 is capable of synchronously maintaining the PDP context status with the wireless communication network, and comprises a requesting means 61, a deactivating means 62 and an informing means 63. In this embodiment, both the mobile station 60 and the wireless communication network activate the first PDP context for the first packet-switched service. The requesting means 61 requests the network to suspend the first packet-switched service when the mobile station 60 establishes a circuit-switched connection with the network. The deactivating means 62 locally deactivates the first PDP context after the circuit-switched connection is established. After the circuit-switched connection is disconnected, if the network informs the mobile station 60 that the first packet-switched service is resumed, then the informing means 63 informs the network that the first PDP context is deactivated. When the network is a GSM/GPRS network, the informing means 63 can inform the network about the deactivated status of the first PDP context by executing the routing area updating procedure to send out the Routing Area Update Request message.

Preferably, the deactivating means 62 further stores a deactivation record in the mobile station 60 for showing that the mobile station 60 has deactivated the first PDP context locally. The informing means 63 then informs the network about the deactivated status of the first PDP context according to the deactivation record.

If both the mobile station 60 and the network activate the first PDP context for the first packet-switched service and a second PDP context for a second packet-switched service, then the requesting means 61 requests the network to suspend both the first and second packet-switched services when the above circuit-switched connection is established. Then, after the circuit-switched connection is established, the deactivating means 62 locally deactivates the first and second PDP contexts. After the circuit-switched connection is disconnected, if the network informs the mobile station 60 that the first and second packet-switched services are resumed, then the informing means 63 informs the network that the first and second PDP contexts are deactivated. When the network is the GSM/GPRS network, the informing means 63 can inform the network about the deactivated status of the first and second PDP contexts by executing the routing area updating procedure only once, as explained above.

Please note that all of the requesting means 61, the deactivating means 62 and the informing means 63 mentioned above can be realized by hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (SIP), or computer on module (COM).

While the present invention has been shown and described with reference to the preferred embodiments thereof and the illustrative drawings, it should not be considered as limited thereby. Various possible modifications and alterations can be conceived by persons skilled without departing from the scope of the present invention, which is defined by the appended claims.

## Claims

1. A method used in a mobile station for synchronously maintaining packet data protocol PDP context status between a wireless communication network and the mobile station, wherein both the mobile station and the wireless communication network activate a first PDP context for a first packet-switched service, the method comprising:
requesting (31) the wireless communication network to suspend the first packet-switched service when a circuit-switched connection with the wireless communication network is established;
deactivating (32) the first PDP context after the circuit-switched connection is established; and the method being **characterized by**:
informing (33) the wireless communication network, after
the circuit-switched connection is disconnected, that the first PDP context is deactivated when the wireless communication network informs that the first packet-switched service is resumed.

2. The method of claim 1, wherein the deactivating step comprises:
storing a deactivation record for showing that the mobile station has deactivated the first PDP context.

3. The method of claim 2, wherein the informing step is executed according to the deactivation record.

4. The method according one or more of the claims 1 to 3, wherein the wireless communication network is a GPRS-enabled GSM network.

5. The method of claim 4, wherein the informing step is executed by executing a routing area updating procedure.

6. The method of claim 5, wherein the routing area updating procedure comprises sending a Routing Area Update Request message to the wireless communication network, wherein the Routing Area Update Request message comprises an information element indicating a status of the first PDP context.

7. The method of claim according one or more of the claims 1 to 6, wherein both the mobile station and the wireless communication network further activate a second PDP context for a second packet-switched service, the method further comprising:
requesting the wireless communication network to suspend the second packet-switched service when the circuit-switched connection is established;
deactivating the second PDP context after the circuit-switched connection is established; and
informing the wireless communication network, after the circuit-switched connection is disconnected, that the second PDP context is deactivated when the wireless communication network informs that the second packet-switched service is resumed.

8. A mobile station for synchronously maintaining packet data protocol PDP context status with a wireless communication network, wherein both the mobile station and the wireless communication network activate a first PDP context for a first packet-switched service, the mobile station comprising:
a requesting means (61) for requesting the wireless communication network to suspend the first packet-switched service when the mobile station establishes a circuit-switched connection with the wireless communication network;
a deactivating means (62) for deactivating the first PDP context after the circuit-switched connection is established; and the mobile station being **characterized by**:
an informing means (63) for informing the wireless communication network, after the circuit-switched connection is disconnected, that the first PDP context is deactivated when the wireless communication network informs the mobile station that the first packet-switched service is resumed.

9. The mobile station of claim 8, wherein the deactivating means is adapted to deactivate the first PDP context according to request of a user.

10. The mobile station of claim 8 or 9, wherein the deactivating means is further adapted to store a deactivation record for showing that the mobile station has deactivated the first PDP context.

11. The mobile station of claim 10, wherein the informing means is adapted to inform the wireless communication network according to the deactivation record.

12. The mobile station according one or more of the claims 8 to 11, wherein the wireless communication network is a GPRS-enabled GSM network.

13. The mobile station of claim 12, wherein the informing means is adapted to inform the wireless communication network by performing a routing area updating procedure.

14. The mobile station of claim 13, wherein the routing area updating procedure comprises sending a Routing Area Update Request message to the wireless communication network, wherein the Routing Area Update Request message comprises an information element indicating a status of the first PDP context.

15. The mobile station according one or more of the claims 8 to 14, wherein both the mobile station and the wireless communication network are adapted to further activate a second PDP context for a second packet-switched service; the requesting means is adapted to further request the wireless communication network to suspend the second packet-switched service when the circuit-switched connection is established; the deactivating means is adapted to further deactivate the second PDP context after the circuit-switched connection is established; the informing means is adapted to further inform the wireless communication network, after the circuit-switched connection is disconnected, that the second PDP context is deactivated when the wireless communication network informs the mobile station that the second packet-switched service is resumed.

## Patentansprüche

1. Verfahren verwendet in einer Mobilen Station zum synchronen verwalten eines Paket- Daten-Protokoll PDP- Kontext- Status zwischen einem drahtlosen Kommunikationsnetzwerk und der Mobilen Station, wobei sowohl die Mobile Station und das drahtlose Kommunikationsnetz einen ersten PDP- Kontext für einen ersten paketvermittelten Dienst aktivieren, das Verfahren umfasst:
Auffordern (31) des drahtlosen Kommunikations- Netzwerk, den ersten paketvermittelten Dienst zu unterbrechen, wenn eine leitungsvermittelt Verbindung mit dem drahtlosen Kommunikationsnetzwerk aufgebaut ist;
Deaktivieren (32) des ersten PDP- Kontexts nach dem die leftungsvermittelte Verbindung aufgebaut wurde, und das Verfahren ist
**gekennzeichnet durch**:
Informieren (33) des drahtlosen Kommunikationsnetzes, nachdem die leitungsvermittelte Verbindung unterbrochen ist, dass der erste PDP- Kontext deaktiviert ist, wenn das drahtlose Kommunikationsnetzwerk darüber informiert, dass der erste paketvermittelte Dienst wieder aufgenommen wird.

2. Das Verfahren nach Anspruch 1, wobei der Deaktivierungsschritt folgendes umfasst:
Speichern eines Datensatzes für die Deaktlvlerung, der anzeigt, dass die Mobile Station den ersten PDP- Kontext deaktiviert.

3. Das Verfahren nach Anspruch 2, wobei der Informationsschritt gemäß dem Deaktivierungsdatensatz ausgeführt wird.

4. Das Verfahren nach einem oder mehreren der Ansprüche 1 bis 3, wobei das drahtlose Kommunikationsnetz ein GPRS- fähiges GSM- Netzwerk ist.

5. Das Verfahren nach Anspruch 4, wobei der Informationsschritt ausgeführt wird, durch Ausführen einer Routing- Bereichs- Aktuallsierungs- Prozedur.

6. Das Verfahren nach Anspruch 5, wobei die Routing- Bereichs- Aktualisierungs- Prozedur das Senden einer Routing- Bereichs Aktualisierungs- Nachricht an das drahtlose Kommunikationsnetzwerk umfasst, wobei die Routing- Bereichs- Aktualisierungs- Nachricht ein Informationselement umfasst, das einen Status des ersten PDP- Kontexts anzeigt.

7. Das Verfahren nach Anspruch nach einem oder mehreren der Ansprüche 1 bis 6, wobei sowohl die Mobile Station und das drahtlose Kommunikationsnetzwerk ferner einen zweiten PDP- Kontext für einen zweiten paketvermittelten Dienstes aktivieren, wobei das Verfahren ferner umfasst:
Auffordernden vom drahtlosen Kommunikationsnetz den zweiten paketvermittelten Dienst auszusetzen, wenn die leitungsvermittelte Verbindung hergestellt wird;
Deaktivieren des zweiten PDP- Kontextes, nachdem die leitungsvermittelte Verbindung aufgebaut ist, und
Informieren des drahtlosen Kommunikationsnetzwerks, nachdem die leitungsvermittelte Verbindung getrennt wird, dass der zweite PDP- Kontext deaktiviert ist, wenn das drahtlose Kommunikationsnetzwerk darüber informiert, dass der zweite paketvermittelte Dienst wieder aufgenommen wird.

8. Eine Mobile Station zum synchronen Verwalten eines Paket- Daten- Protokoll PDP- Kontext-Status mit einem drahtlosen Kommunikationsnetz, wobei sowohl die Mobile Station und das drahtlose Kommunikationsnetzwerk einen ersten PDP- Kontext für einen ersten paketvermittelten Dienst aktivieren, die Mobile Station umfasst:
ein Anforderungsmittel (61) zum Anfordern an das drahtlose Kommunikationsnetzwerk den ersten paketvermittelten Dienst auszusetzen, wenn die Mobilen Station eine leitungsvermittelte Verbindung mit dem drahtlosen Kommunikationsnetzwerk herstellt;
ein Deaktivierungsmittel (62) zum Deaktivieren des ersten PDP- Kontext nach dem die leitungsvermittelte Verbindung hergestellt wird,
und die mobile Station Ist **gekennzeichnet durch**:
eine Informationseinrichtung (63) zum Informieren des drahtlosen Kommunikationsnetz, nachdem die leitungsvermittelte Verbindung getrennt wird, dass der erste PDP- Kontext deaktiviert ist, wenn das drahtlose Kommunikationsnetzwerk die mobile Station Informiert, dass der erste paketvermittelte Dienst wieder aufgenommen wird.

9. Die Mobile Station nach Anspruch 8, wobei das Deaktivierungsmlttel dazu ausgelegt ist, den ersten PDP- Kontext nach einer Benutzeranforderung zu deaktivieren.

10. Die Mobile Station nach Anspruch 8 oder 9, wobei das Deaktivierungsmittel ferner angepasst ist, um einen Datensatz zur Deaktivierung zu speichern, aus dem hervorgeht, dass die Mobile Station den ersten PDP- Kontext deaktiviert hat.

11. Die mobile Station nach Anspruch 10, wobei die Information angepasst ist, um das drahtlose Kommunikationsnetz gemäß dem Datensatz zur Deaktivierung zu informieren.

12. Die Mobile Station nach einem oder mehreren der Ansprüche 8 bis 11, wobei das drahtlose Kommunikationsnetz ein GPRS- fähiges GSM- Netzwerk ist.

13. Die Mobile Station gemäß Anspruch 12, wobei die Information angepasst Ist, um das drahtlose Kommunikationsnetz durch Ausführen einer Routing- Bereichs- Aktualisierungs- Prozedur zu informieren.

14. Die Mobile Station nach Anspruch 13, wobei die Routing- Bereichs- Aktualisierungs- Prozedur das Senden einer Routlng- Bereichs- Aktuallsierungsanfragenachricht an das drahtlose Kommunikationsnetzwerk umfasst, wobei die Routing- Bereichs-Aktualisierungsanfragenachricht ein Informationselement umfasst, das einen Status des ersten PDP- Kontext anzeigt.

15. Die Mobile Station nach einem oder mehreren der Ansprüche 8 bis 14, wobei sowohl die Mobile Station und das drahtlose Kommunikationsnetzwerk ausgebildet sind, um ferner einen zweiten PDP- Kontext für einen zweiten paketvermittelten Dienstes zu aktivieren; die anfordernden Mittel sind ferner eingerichtet, um das drahtlose Kommunikationsnetz zur Aussetzung des zweiten paketvermittelten Dienstes aufzufordern, wenn die leitungsvermittelte Verbindung hergestellt ist, das Deaktivierungsmittel ist ferner darauf eingerichtet, den zweiten PDP-Kontextes zu aktivieren, nachdem die leitungsvermittelte Verbindung aufgebaut ist; die Informationsmittel sind weiterhin dazu eingerichtet, das drahtlose Kommunikationsnetzwerk zu informieren, nach dem die leitungsvermittelte Verbindung unterbrochen ist, dass der zweite PDP- Kontext deaktiviert wird, wenn das drahtlose Kommunikationsnetzwerk die Mobile Station darüber informiert, dass der zweite paketvermittelte Dienst wieder aufgenommen wird.

## Revendications

1. Une méthode utilisée dans une station mobile pour maintenir de manière synchronisée un état de contexte de protocole de données de paquets PDP entre un réseau de communication sans fil et la station mobile, dans laquelle la station mobile et le réseau de communication sans fil activent un premier contexte PDP pour un premier service de commutation de paquets, la méthode comportant :
la transmission d'une requête (31) au réseau de communication sans fil dans le but de suspendre le premier service de commutation de paquets lors de l'établissement d'une connexion de commutation de circuit avec le réseau de communication sans fil ;
la désactivation (32) du premier contexte PDP à la suite de l'établissement de la connexion de commutation de circuit ; et la méthode étant **caractérisée par** :
l'information (33) du réseau de communication sans fil, à la suite de la déconnexion de la connexion de commutation de circuit, que le premier contexte PDP est désactivé lorsque le réseau de communication sans fil informe l'achèvement du premier service de commutation par paquet.

2. La méthode de la revendication 1, dans laquelle l'étape de désactivation comporte :
le stockage d'un enregistrement de désactivation pour montrer que la station mobile a désactivé le premier contexte.

3. La méthode de la revendication 2, dans laquelle l'étape d'information est exécutée en fonction de l'enregistrement de désactivation.

4. la méthode de l'une quelconque des revendications 1 à 3, dans laquelle le réseau de communication sans fil est un réseau GSM compatible GPRS.

5. La méthode de la revendication 4, dans laquelle l'étape d'information est exécutée au moyen de l'exécution d'une procédure de mise à jour de la zone de routage

6. La méthode de la revendication 5, dans laquelle la procédure de mise à jour de la zone de routage comporte la transmission d'un message de Requête de Mise à jour de Zone de Routage destiné au réseau de communication sans fil, dans laquelle le message de Requête de Mise à jour de Zone de Routage comporte un élément d'information indiquant l'état du premier contexte PDP.

7. La méthode de l'une quelconque des revendications 1 à 6, dans laquelle la station mobile ainsi que le réseau de communication sans fil activent en outre un second contexte PDP pour un second service de commutation de paquet, la méthode comportant en outre :
la requête au réseau de communication sans fil d'une suspension du second service de commutation de paquet lors de l'établissement de la connexion de commutation de circuit ; et
la désactivation du second contexte PDP à la suite de l'établissement de la connexion de commutation de circuits ; et
l'information du réseau de communication sans file, à la suite de la déconnexion de la connexion de commutation de circuit, que le second contexte PDP est désactivé lorsque le réseau de communication sans fil informe l'achèvement du second service de commutation de paquets.

8. Une station mobile pour maintenir de manière synchronisée un état de contexte de protocole de données de paquets PDP avec un réseau de communication sans fil, dans laquelle la station mobile et le réseau de communication sans fil activent un premier contexte PDP pour un premier service de commutation de paquets, la station mobile comportant :
des moyens (61) pour requérir du réseau de communication sans fil la suspension du premier service de commutation de paquets lorsque la station mobile établit une connexion de commutation de circuit avec le réseau de communication sans fil ;
des moyens de désactivation (62) pour désactiver le premier contexte PDP à la suite de l'établissement de la connexion de commutation de circuit ; et la station mobile étant **caractérisée par** :
des moyens d'information (63) du réseau de communication sans fil, à la suite de la déconnexion de la connexion de commutation de circuit, que le premier contexte PDP est désactivé lorsque le réseau de communication sans fil informe la station mobile de l'achèvement du premier service de commutation par paquet.

9. La station mobile de la revendication 8, dans laquelle les moyens de désactivation sont adaptés à la désactivation du premier contexte PDP suivant une demande d'un utilisateur.

10. La station mobile de la revendication 8 ou 9, dans laquelle les moyens de désactivation sont en outre adaptés pour le stockage d'un enregistrement de désactivation montrant que la station mobile a désactivé le premier contexte PDP.

11. La station mobile de la revendication 10, dans laquelle les moyens d'information sont adaptés à l'information du réseau de communication sans fil en fonction de l'enregistrement de désactivation.

12. La station mobile de l'une quelconque des revendications 8 à 11, dans laquelle le réseau de communication sans fil est un réseau GSM compatible GPRS.

13. La station mobile de la revendication 12, dans laquelle les moyens d'informations sont adaptés à l'information du réseau de communication sans fil au moyen de l'exécution d'une procédure de mise à jour de la zone de routage

14. La station mobile de la revendication 13, dans laquelle la procédure de mise à jour de la zone de routage comporte la transmission d'un message de Requête de Mise à jour de Zone de Routage destiné au réseau de communication sans fil, dans laquelle le message de Requête de Mise à jour de Zone de Routage comporte un élément d'information indiquant l'état du premier contexte PDP.

15. La station mobile de l'une quelconque des revendications 8 à 14, dans laquelle la station mobile ainsi que le réseau de communication sans fil sont adaptés à activation en outre d'un second contexte PDP pour un second service de commutation de paquet, les moyens de requêtes étant adaptés à requérir du réseau de communication sans fil la suspension du second service de commutation de paquets lors de l'établissement de la connexion de commutation de circuit ; et
les moyens de désactivation étant adapté pour désactiver de surcroît le second contexte PDP à la suite de l'établissement de la connexion de commutation de circuits ; et
les moyens d'information étant adapté à l'information de surcroît du réseau de communication sans file, à la suite de la déconnexion de la connexion de commutation de circuit, que le second contexte PDP est désactivé lorsque le réseau de communication sans fil informe la station mobile de l'achèvement du second service de commutation de paquets.
